# EUROPÄISCHE PATENTSCHRIFT

(11) **EP 3 706 529 B1**
(45) Veröffentlichungstag und Bekanntmachung des Hinweises auf die Patenterteilung: **09.08.2023**
(21) Anmeldenummer: 18803383.1
(22) Anmeldetag: 09.11.2018
(51) Int. Cl.: A01B 59/06

(54) **DOCKINGVORRICHTUNG MIT EINER DOCKINGAUFNAHME UND EINEM DOCKINGEINSCHUB SOWIE VERFAHREN ZUM KOPPELN EINES FAHRZEUGS**
DOCKING APPARATUS HAVING A DOCKING RECEPTACLE AND A DOCKING INSERT, AND METHOD FOR COUPLING A VEHICLE
ARRANGEMENT D'AMARRAGE COMPRENANT UN LOGEMENT D'AMARRAGE ET UN MODULE ENFICHABLE D'AMARRAGE AINSI QUE PROCÉDÉ POUR ACCOUPLER UN VÉHICULE

(30) Priorität: 10.11.2017 DE 102017126476
(43) Veröffentlichungstag der Anmeldung: 16.09.2020
(73) Patentinhaber: SYN TRAC GmbH, 4822 Bad Goisern a.H. (AT)
(72) Erfinder: PUTZ, Stefan, 4822 Bad Goisern (AT)
(74) Vertreter: HGF
(86) Internationale Anmeldenummer: PCT/EP2018/080817
(87) Internationale Veröffentlichungsnummer: WO 2019/092204

(56) Entgegenhaltungen:
- WO-A1-2014/153577
- DE-A1- 4 132 889
- DE-U1-202011 106 833

## Beschreibung

Die vorliegende Erfindung betrifft eine Dockingvorrichtung mit einer Dockingaufnahme und einem Dockingeinschub, sowie ein Verfahren zum Koppeln eines Fahrzeugs.

Eine Kopplungseinrichtung bzw. eine Anhängerkupplung ist eine Vorrichtung, mit der ein Fahrzeug mit einem Anhänger verbindbar ist. Je nach Art des Zugfahrzeuges und des Anhängers findet man Bauarten wie z.B. eine Bolzenkupplung, üblich in der Land- und Forstwirtschaft, eine Kugelkopfkupplung, üblich bei PKW, eine Maulkupplung bei LKWs und Traktoren und eine Sattelkupplung bei Sattelzügen.

Zum Verbinden eines Nutzfahrzeuges mit einem Anbaugerät sind Kopplungseinrichtungen wie z.B. die Anhängerkupplung (vorn und hinten über 40 mm Bolzen), ein Zugpendel, ein Hitchhaken, ein Piton-Fix, eine Kugelkopfkupplung (K 80 spielfreie Kupplungskugel ähnlich der PKW Anhängung in verstärkter Version), eine Dreipunkthydraulik hinten (Heckhubwerk) und vorn (optionales Fronthubwerk), mit selbstarretierenden Schnellkupplungen, auch Fanghaken genannt (optional), eine Ackerschiene, ein Schnellkuppeldreieck (Weiste-Dreieck), Frontlader (optional), eine Kommunalanbauplatte, eine Sattelkupplung bei Großtraktoren oder auch ein Zwischenachsanbau für Mähwerksanbauten bekannt.

Ein Dreipunkt-Kraftheber, auch als Dreipunkthydraulik bekannt, ist eine hydraulische Vorrichtung an Traktoren, um Anbaugeräte anzukuppeln und anzuheben. Dieser ist häufig an der Rückseite eines Traktors zu finden (Heckhubwerk). An der Front des Traktors angebracht wird von einem Fronthubwerk gesprochen. Die Abwärtsbewegung erfolgt entweder hydraulisch oder bei einfacheren Systemen durch das eigene Gewicht seiner Elemente (Unterlenker) bzw. der Anbaugeräte.

In der AT 514 147 B1 ist ein Koppelungsteil eines Fahrzeugkoppelungssystems offenbart, wobei das Koppelungsteil eine Positioniereinrichtung zum Führen eines Gegenkoppelungsteils in eine Fixierposition bei einem Ankoppelungsvorgang aufweist. Eine Fixiereinrichtung ist bewegbar zwischen einer Freigabestellung und einer Fixierstellung bewegbar angeordnet, wobei die Fixiereinrichtung in der Fixierstellung ein Gegenkoppelungsteil in der Fixierposition lagefest fixieren kann. Das Koppelungsteil weist eine Kontaktiereinrichtung mit bewegbar angeordneten Anschlüssen auf, wobei in der Fixierstellung der Fixiereinrichtung die Anschlüsse durch die Kontaktiereinrichtung in Richtung eines in der Fixierposition befindlichen Gegenkoppelungsteils bewegbar sind, und wobei die Positioniereinrichtung eine Fangvorrichtung aufweist, um einen in einem Fangbereich angeordneten Gegenkoppelungsteil in die Fixierposition zu verbringen. Die Fangvorrichtung weist wenigstens einen beweglichen Fangarm auf und die Positioniereinrichtung weist eine Zentrieraufnahme, in welcher ein Einschubkörper des Gegenkoppelungsteils einbringbar ist, und wobei sich die Zentrieraufnahme in Richtung eines ersten Endes der Zentrieraufnahme verengt.

In der DE 4132889 A1, der DE 2900866 A1, der DE 3009284 A1, der DE 20 2005 005 676 A1, der DE 8215040 A1, der CH 701819 A1 und der FR 2687115 A1 sind weiter Kopplungsvorrichtungen offenbart.

Im Realbetrieb von Nutzfahrzeugen ist oftmals ein mehrmaliger Wechsel des Anbaugerätes notwendig. Ein An- bzw. Abkoppeln eines Anbaugeräts ist von einer erfahrenen Person nur unter großem Zeitaufwand und Kraftaufwand möglich, da das Wechseln des Anhängers ein Hantieren am Anhänge- oder Kupplungssystem, beispielsweise zum Verbinden der Zapfwelle oder elektrischer Anschlüsse, notwendig ist. Ein derartiger Wechsel stellt ein nicht unerhebliches Gefahrenpotenzial dar, da für den Wechsel eine Person im Gefahrenbereich zwischen Zugfahrzeug und Anhänger hantieren muss. Daher sind in der Regel zwei Personen erforderlich.

Aufgabe der Erfindung ist es daher, eine Kopplungsvorrichtung mit korrespondierend ausgebildeten Kopplungseinrichtungen bereitzustellen, die eine sichere und zuverlässige Verbindung zwischen einem Fahrzeug und einem Anbaugerät ausbildet, und wobei die Verbindung zwischen Fahrzeug und Anbaugerät von einer Person herstellbar ist.

Die Aufgabe wird mit den Merkmalen des Anspruch 1 gelöst.

Vorteilhafte Weiterbildungen sind in den hiervon abhängigen Unteransprüchen angegeben.

Es ist eine weitere Aufgabe, ein Verfahren zum Koppeln eines Fahrzeugs zu schaffen, mit dem Fahrzeug mit einem Anbaugerät und dergleichen in einfachr sicherer und zuverlässiger Weise gekoppelt werden kann.

Die Aufgabe wird mit den Merkmalen des Anspruch 17 gelöst.

Vorteilhafte Ausgestaltungen davon sind in den davon abhängigen Ansprüchen angegeben.

Mittels der erfindungsgemäßen Vorrichtung ist eine sichere und zuverlässige Verbindung zwischen einem Fahrzeug und einem Anbaugerät oder einer zusätzlichen Achse oder einem Anhänger möglich.

Erfindungsgemäß ist eine Dockingvorrichtung mit einer ersten Dockingeinrichtung und einer zweiten Dockingeinrichtung ausgebildet, wobei die erste Dockingeinrichtung eine in etwa U-förmige Vorzentriereinrichtung mit einer sich konisch verjüngenden Einführwanne besitzt oder zumindest eine erste und eine zweite Zentriereinrichtung, wobei die erste und die zweite Zentriereinrichtung jeweils Kopplungselemente oder Gegenkopplungselemente umfassen, und mit einer zweiten Dockingeinrichtung mit einem Vorzentrierkörper mit einer sich in einer Einführrichtung etwa konisch verjüngenden und in horizontaler Richtung erstreckenden Einführfläche mit zumindest einer ersten und einer zweiten Zentriereinrichtung, wobei die erste und die zweite Zentriereinrichtung jeweils zwei Kupplungselemente und/oder Gegenkupplungselemente umfassen, die zum Zentrieren der zweiten Dockingeinrichtung in der ersten Dockingeinrichtung dienen.

Erfindungsgemäß kann insbesondere in einer Einführrichtung hinten an der Einführwanne in einer sich quer zur Einführrichtung erstreckende Ebene eine erste Dockingwandung angeformt, in der eine Dockingausnehmung zum Aufnehmen einer in Einführrichtung fixierten Kupplungsplatte ausgebildet ist und bei der zweiten Dockingeinrichtung am Einführkörper in Einführrichtung vorne eine sich in einer Ebene quer zur Einführrichtung erstreckende, zweite Dockingwandung angeformt sein, wobei in der zweiten Dockingwandung eine Dockingausnehmung zum Aufnehmen einer axial fest fixierten Kupplungsplatte ausgebildet ist.

Nach der Erfindung kann zudem in den ersten Dockingwandungen der ersten und zweiten Dockingeinrichtung je eine Antriebswellenkopplungseinrichtung zum Verbinden einer anbaugeräteseitigen Antriebswelle mit einer fahrzeugseitigen Antriebswelle vorgesehen sein, wobei die Antriebswellenkopplungseinrichtungen zum Herbeiführen einer Zwangskopplung in eingefahrenem Zustand und verriegeltem Zustand der Dockingeinrichtungen axial fluchtend ausgebildet sind und axial jeweils festgelegt sind, so dass bei einer mechanischen Kupplung der Kopplungseinrichtungen eine Zwangsverbindung herbeigeführt wird.

Zudem können nach der Erfindung in den jeweils zweiten Dockingwandungen Zapfwellenkopplungseinrichtungen zum Verbinden einer anbaugeräteseitigen Zapfwelle mit einer fahrzeugseitigen Zapfwelle angeordnet sein, wobei die Zapfwellenkopplungseinrichtungen in gekoppeltem Zustand miteinander fluchtend ausgebildet sind und axial an den zweiten Dockingwandungen derart festgelegt sind, dass beim Verbinden der Dockingeinrichtungen miteinander eine Zwangsverbindung herbeigeführt wird.

Unter einer Kopplungseinrichtung wird im Rahmen der vorliegenden Erfindung ein Teil einer Kopplungsvorrichtung zum Verbinden eines Fahrzeuges mit einem Anbaugerät oder zusätzlichen Achsen verstanden, wobei jeweils an Fahrzeug und Anbaugerät oder Zusatzachse korrespondierend ausgebildete Kopplungseinrichtungen vorgesehen sind, die gemeinsam die Kopplungsvorrichtung ausbilden. Eine Kopplungsvorrichtung wird im Folgenden auch Dockingvorrichtung und eine Kopplungseinrichtung wird im Folgenden auch als Dockingeinschub bzw. Dockingaufnahme bezeichnet.

Eine Kopplungseinrichtung (Dockingaufnahme, Dockingeinschub) ist somit ein Teil einer Kopplungsvorrichtung (Dockingvorrichtung) zum Verbinden eines Fahrzeuges mit einem Anbaugerät, wobei jeweils an dem Fahrzeug und an dem Anbaugerät korrespondierend ausgebildete Kopplungseinrichtungen (Dockingaufnahme, Dockingeinschub) vorgesehen sind, die gemeinsam die Kopplungsvorrichtung ausbilden.

Erfindungsgemäß ist eine erste Kopplungseinrichtung vorgesehen. Diese wird im Folgenden als Dockingaufnahme bezeichnet. Die Dockingaufnahme umfasst eine in etwa U-förmige Vorzentriereinrichtung mit einer sich in einer Einführrichtung in etwa konisch verjüngenden Einführwanne zum Vorzentrieren eines korrespondierend zur Dockingaufnahme ausgebildeten Dockingeinschubes, zumindest eine erste und eine zweite Zentriereinrichtung, wobei die erste und die zweite Zentriereinrichtung jeweils zwei Kopplungselemente umfassen, die zum Zentrieren eines Dockingeinschubes bezüglich der Dockingaufnahme entlang von vier Zentrierachsen in einer Einführrichtung ausgebildet sind und wobei eine Einzugseinrichtung mit zwei hydraulisch betätigbaren Einzugs- bzw. Fanghaken vorgesehen ist.

Durch das Vorsehen von ersten und zweiten Zentriereinrichtungen und die robuste Ausbildung der Dockingaufnahme können wesentlich höhere Torsionskräften entlang der Fahrzeuglängsachse zwischen Fahrzeug und Anbaugerät aufgenommen werden.

Durch Verwendung einer erfindungsgemäßen Dockingaufnahme und eines korrespondierend ausgebildeten Dockingeinschubes vereinfacht sich das Ankoppeln eines Anhängers oder eines Anbaugerätes an ein Fahrzeug erheblich. Ein Wechsel kann im Wesentlichen vollautomatisch erfolgen, da die Dockingaufnahme und der Dockingeinschub mittels der Zentriereinrichtungen in einer Einführrichtung axial fluchtend zueinander ausrichtbar sind.

Eine lagefeste Fixierung der Dockingaufnahme und des Dockingeinschubes erfolgt mittels Fanghaken. Dadurch kann der Betreiber des Fahrzeuges während des Kopplungsvorganges in einer Fahrkabine verbleiben, wodurch der Zeitaufwand verringert und das Gefahrenpotenzial nahezu eliminiert wird.

Weiterhin ist der Dockingeinschub nahezu an alle geeigneten Arten von Anbaugeräten und Werkzeugen anbringbar, so dass diese auf einfache Weise mit einem mit einer erfindungsgemäßen Dockingaufnahme versehenen Fahrzeug verbindbar sind.

Im Rahmen der vorliegenden Erfindung wird unter einer Einführrichtung eine Richtung bzw. eine Relativbewegung verstanden, in die ein "steckerartig" ausgebildeter Dockingeinschub beim Einführen in eine "buchsenartig" ausgebildete Dockingaufnahme bewegt wird. Die Einführrichtung ist somit immer eine Richtung, die sich von einem kopplungsseitigen Ende einer Dockingaufnahme in Richtung eines fahrzeugseitigen Endes einer Dockingaufnahme bzw. von einem anbaugeräteseitigen Ende eines Dockingeinschubes in Richtung eines kopplungsseitigen Endes eines Dockingeinschubes erstreckt bzw. eine Richtung in Längsrichtung von Fahrzeugen und Anbaugeräten von einem Dockingeinschub in Richtung einer Dockingaufnahme bzw. von einer Fahrzeughinterseite in Richtung einer Vorderseite eines Fahrzeuges.

Die erste Zentriereinrichtung kann zwei Gegenkopplungselemente aufweisen, die als buchsenförmige (in etwa rohrförmige) erste Zentrieraufnahmen, die in Einführrichtung einen vorzugsweise kegelförmig ausgebildeten Einführabschnitt und einen sich daran anschließenden zylindrischen Zentrierabschnitt aufweist.

Die zweite Zentriereinrichtung kann Kopplungselemente aufweisen, die als Zentrierzapfen ausgebildet sind, wobei diese Zentrierzapfen vorzugsweise in Einführrichtung einen kegelförmigen Einführabschnitt und einen sich daran anschließenden zylindrischen Zentrierabschnitt aufweisen.

Weiterhin kann eine Fixiereinrichtung in einem Fixierbereich der ersten Zentrierausnehmung vorgesehen sein, wobei die Fixiereinrichtung zum axialen Fixieren von ersten Zentrierzapfen eines Dockingeinschubes in den korrespondierend ausgebildeten ersten Zentrierausnehmungen der Dockingaufnahme ausgebildet ist.

Die Fixiereinrichtung kann zum Fixieren hydraulisch betätigbare Keilgabeln aufweisen, die in vertikaler Richtung derart verschiebbar sind, dass Fixierflächen der Keilgabeln in entsprechende Fixiernuten eingreifen. Die Zentriernuten können bauchig bzw. konvex ausgeführt sein.

Die Kopplungselemente und/oder die Gegenkopplungselemente der ersten und der zweiten Zentriereinrichtung können zumindest zwei axiale Anschlageinrichtungen aufweisen, die eine Relativbewegung zwischen der Dockingaufnahme und einem Dockingeinschub begrenzen.

Die Anschläge können vorzugsweise an ersten und/oder zweiten Zentrierzapfen und/oder an ersten und/oder zweiten Zentrierausnehmungen, vorzugsweise als kreisringförmige Anschlagsflächen ausgebildet sein und sich in einer Ebene senkrecht zur Einführrichtung erstrecken.

Diese axialen Anschlagsflächen können radial umlaufend und gleich voneinander beabstandete Ausnehmungen aufweisen, die zum Abführen und/oder zum Aufnehmen von Verschmutzungen ausgebildet sind.

Derartige Verschmutzungen würden die Anschlagsfläche des Anschlages in Einführrichtung verändern. Dies ist dahingehend nachteilig, dass eine exakte Kopplung zwischen Dockingaufnahme und Dockingeinrichtung erheblich erschwert ist.

An der Einführwanne kann in Einführrichtung vorne eine sich in einer Ebene quer zur Einführrichtung erstreckende zweite Dockingwandung angeformt sein.

In dieser zweiten Dockingwandung ist vorzugsweise die zweite Zentriereinrichtung angeordnet.

An der Einführwanne in Einführrichtung hinten kann eine sich in einer Ebene quer zur Einführrichtung erstreckende erste Dockingwandung angeformt sein, die in vertikaler Richtung unterhalb der Einführwanne angeordnet ist.

Die erste Zentriereinrichtung ist in der ersten Dockingwandung angeordnet. In der zweiten Dockingwandung kann eine Dockingausnehmung zum Aufnehmen einer ortsfest fixierbaren Kupplungsplatte ausgebildet sein.

Die Einführwanne kann zwei sich in vertikaler Richtung erstreckende innere Seitenwandungen aufweisen, die mit der Einführwanne und der zweiten Dockingwandung verbunden sind.

In den inneren Seitenwandungen können sich in Einführrichtung erstreckende kulissenartig ausgebildete Fangzapfenführungen zum Aufnehmen entsprechender, an einem Dockingeinschub vorgesehener Fangzapfen ausgebildet sein. Diese Führungen sind vorzugsweise geradlinig bzw. linear ausgeführt.

Weiterhin können in etwa parallel zu den inneren Seitenwandungen angeordnete äußere Seitenwandungen vorgesehen sein. In den inneren und äußeren Seitenwandungen sind in entsprechenden Bohrungen Wellen angeordnet, auf denen die Fanghaken drehbar gelagert sind.

Dies hat den Vorteil gegenüber einer schwimmenden Lagerung von Fanghaken, wie bspw. in der AT 514 147 B1 offenbart, dass nahezu kein Spiel vorhanden ist. Auf diese Weise wird eine präzisere Position der Fanghaken im Betrieb ermöglicht, ein Verzug verringert und es können größere Kräfte aufgenommen werden.

Somit können die Fanghaken in einem durch die inneren und äußeren Seitenwandungen begrenzten Fanghakenraum angeordnet sein. Auf diese Wiese sind die Fanghaken samt entsprechender Fanghakenzylinder geschützt verbaut.

In der ersten Dockingwandung kann eine Antriebswellenkopplungseinrichtung zum Verbinden einer fahrzeugseitigen Antriebswelle mit einer anbaugeräteseitigen Antriebswelle vorgesehen sein.

In der zweiten Dockingwandung kann eine Zapfwellenkopplungseinrichtung zum Verbinden einer fahrzeugseitigen Zapfwelle mit einer anbaugeräteseitigen Zapfwelle vorgesehen sein.

Diese Kopplungseinrichtungen sind vorzugsweise im Bereich der ersten bzw. der zweiten Zentriereinrichtung angeordnet.

Weiterhin ist ein Fahrzeug mit einer und vorzugsweise mit zwei erfindungsgemäßen Dockingaufnahmen vorgesehen.

Weiterhin ist erfindungsgemäß eine zweite Kopplungseinrichtung vorgesehen, welche nachfolgend als Dockingeinschub bezeichnet wird. Dieser umfasst einen Vorzentrierkörper mit einer sich in einer Einführrichtung in etwa konisch verjüngenden und sich in horizontaler Richtung erstreckenden Einführfläche, zumindest eine erste und eine zweite Zentriereinrichtung, wobei die erste und die zweite Zentriereinrichtung jeweils zumindest zwei Kopplungselemente und/oder Gegenkopplungselemente umfassen, die zum Zentrieren des Dockingeinschubes bezüglich einer Dockingaufnahme entlang von vier sich in einer Einführrichtung erstreckenden Zentrierachsen ausgebildet sind und zwei sich in horizontaler Richtung quer zur Einführrichtung erstreckender Fangzapfen.

Die erste Zentriereinrichtung kann zwei Kopplungselemente aufweisen, die als Zentrierzapfen ausgebildet sind, wobei die Zentrierzapfen in Einführrichtung einen zylindrischen Zentrierabschnitt und einen kegelförmigen Zentrierabschnitt aufweisen.

Die zweite Zentriereinrichtung kann zwei Gegenkopplungselemente aufweisen, die als buchsenförmige zweite Zentrierausnehmungen ausgebildet sind.

Die Kopplungselemente und/oder die Gegenkopplungselemente der ersten und der zweiten Zentriereinrichtung können zumindest zwei axiale Anschlageinrichtungen aufweisen, die eine Relativbewegung zwischen Dockingeinschub und Dockingaufnahme in Axialrichtung bzw. in Einführrichtung begrenzen.

Am Einführkörper kann in Einführrichtung vorne eine sich in einer Ebene quer zur Einführrichtung erstreckende zweite Dockingwandung angeformt sein.

Am Einführkörper in einer Einführrichtung hinten kann eine sich in einer Ebene quer zur Einführrichtung erstreckende erste Dockingwandung angeformt sein, die in vertikaler Richtung unterhalb des Einführkörpers vorgesehen ist.

In der zweiten Dockingwandung kann eine Dockingausnehmung zum Aufnehmen einer ortsfest fixierbaren Kupplungsplatte ausgebildet sein.

Der Einführkörper kann zwei sich in vertikaler Richtung erstreckende Seitenwandungen aufweisen, die mit der zweiten Dockingwandung und der ersten Dockingwandung verbunden sind, wobei an den Seitenwandungen die sich quer zur Einführrichtung erstreckenden Fangzapfen angeordnet sind.

In der ersten Dockingwandung kann eine Antriebswellenkopplungseinrichtung zum Verbinden einer anbaugeräteseitigen Antriebswelle mit einer fahrzeugseitigen Antriebswelle vorgesehen sein.

Die Antriebswellenkopplungseinrichtung ist vorzugsweise im Bereich der ersten Zentriereinrichtung angeordnet.

In der zweiten Dockingwandung kann eine Zapfwellenkopplungseinrichtung zum Verbinden einer anbaugeräteseitigen Zapfwelle mit einer fahrzeugseitigen Zapfwelle vorgesehen sein.

Die Zapfwellenkopplungseinrichtung ist in der zweiten Dockingwandung vorzugsweise im Bereich der zweiten Zentriereinrichtung angeordnet.

Erfindungsgemäß ist ein Anbaugerät mit zumindest einem erfindungsgemäßen Dockingeinschub vorgesehen.

Weiterhin ist erfindungsgemäß eine Kopplungsvorrichtung bzw. eine Dockingvorrichtung vorgesehen umfassend die Dockingaufnahme und den korrespondierend ausgebildeten Dockingeinschub.

Eine Ausführung einer Dockingvorrichtung mit ersten und zweiten Zentriereinrichtungen entlang von vier Zentrierachsen hat zudem die Vorteile, dass eine rechteckige Kuppelfläche optimal ausgenutzt wird.

Zudem ist erfindungsgemäß ein Verfahren zum Verbinden bzw. Koppeln eines Dockingeinschubes mit einer Dockingaufnahme vorgesehen.

Im Folgenden wird die vorliegende Erfindung anhand der Figuren näher beschrieben. Diese zeigen in
- Figur 1:: eine perspektivische Darstellung einer erfindungsgemäßen Dockingaufnahme,
- Figur 2:: eine seitliche Draufsicht auf die Dockingaufnahme,
- Figur 3:: eine Draufsicht von vorne auf die erfindungsgemäße Dockingaufnahme, und
- Figur 4:: eine Draufsicht von oben auf die erfindungsgemäße Dockingaufnahme.

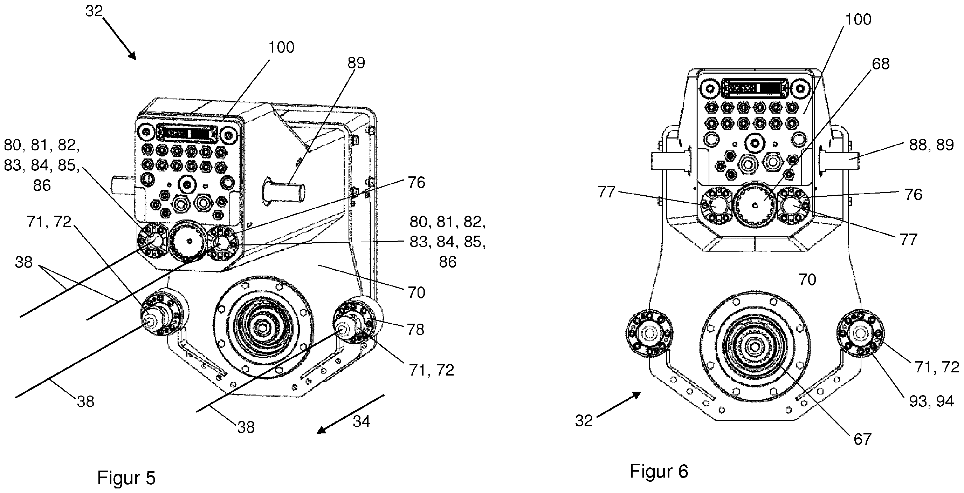

- Figur 5:: eine perspektivische Darstellung eines erfindungsgemäßen Dockingeinschubes,
- Figur 6:: eine Draufsicht von vorne auf den erfindungsgemäßen Dockingeinschub,

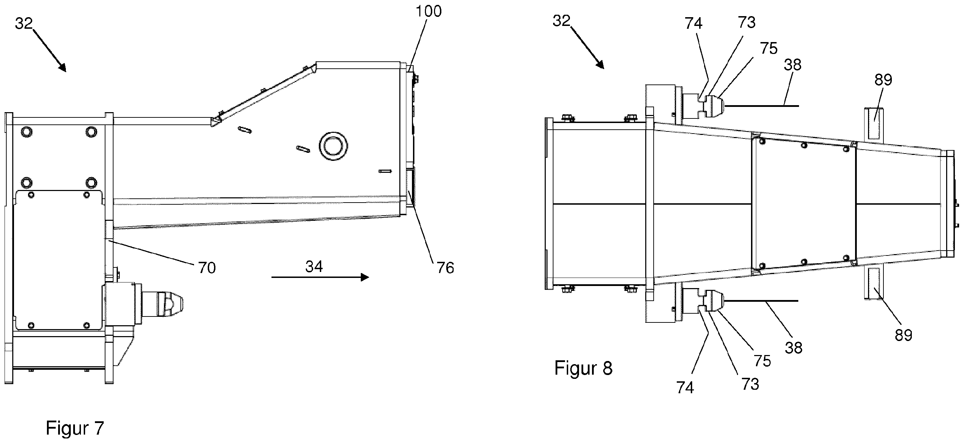

- Figur 7:: eine seitliche Draufsicht auf den Dockingeinschub,
- Figur 8:: eine Draufsicht von oben auf den Dockingeinschub,
- Figur 9:: eine perspektivische Teil-Explosionsdarstellung einer Keilgabel mit Hydraulikzylinder und einer Verriegelungseinrichtung,
- Figur 10:: eine weitere perspektivische Teil-Explosionsdarstellung der Keilgabel mit Hydraulikzylinder und der Verriegelungseinrichtung,
- Figur 11:: eine perspektivische Explosionszeichnung einer erfindungsgemäßen Kupplungsplatte und einer Dockingaufnahme, und
- Figur 12:: eine perspektivische Explosionszeichnung einer weiteren erfindungsgemäßen Kupplungsplatte und eines Dockingeinschubes.

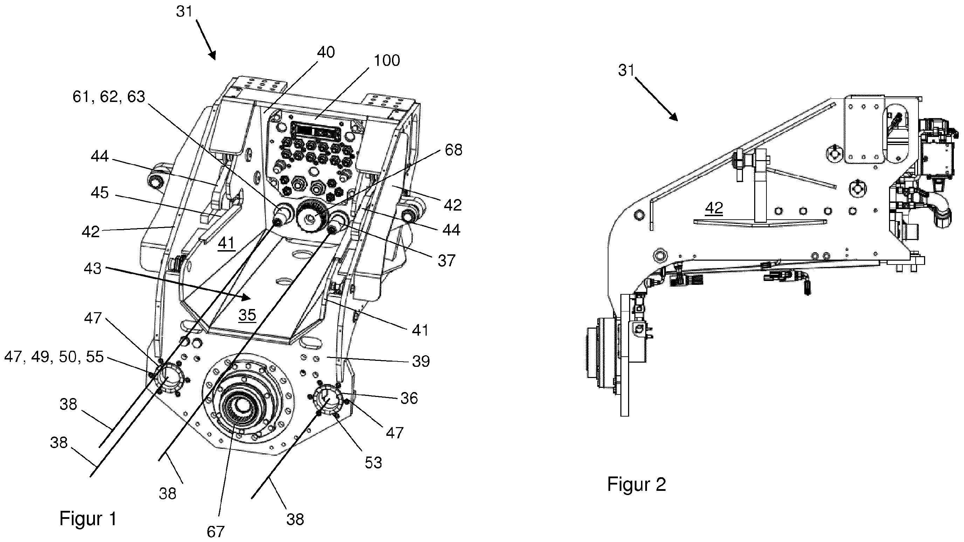

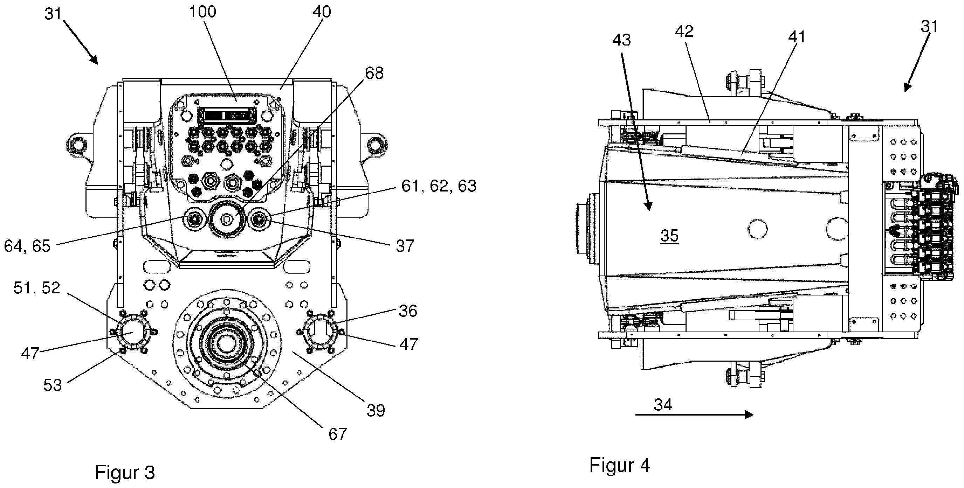

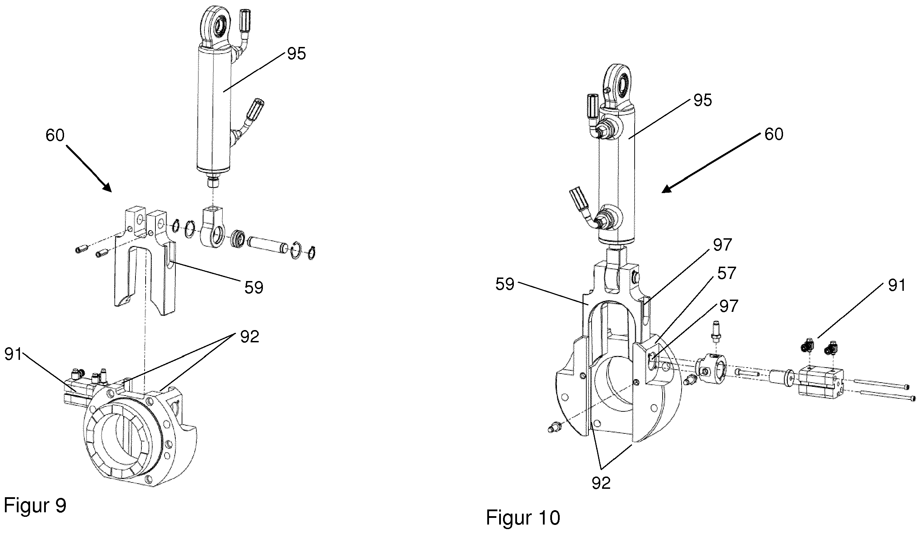

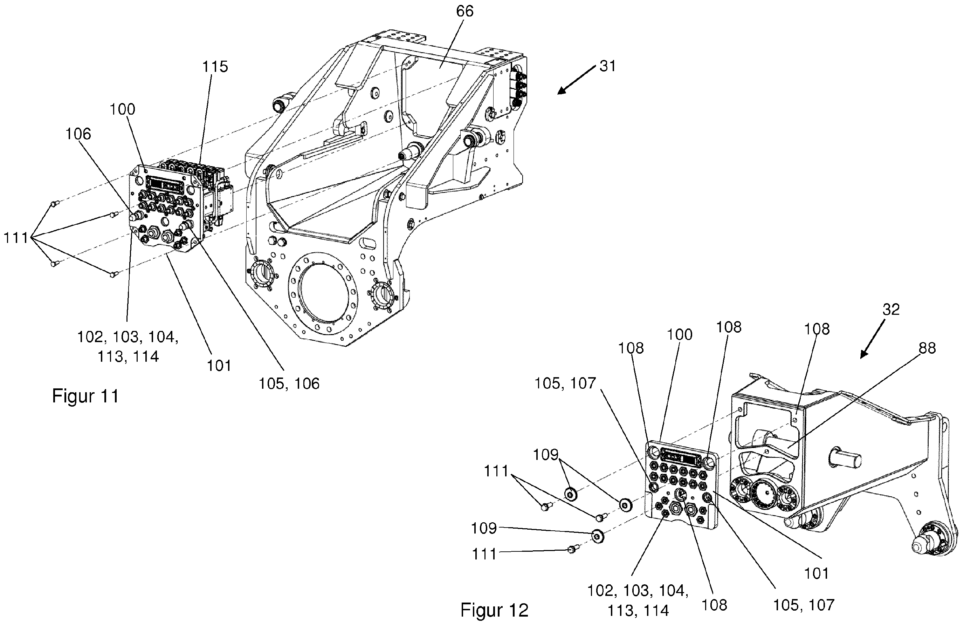

Im Folgenden wird eine erfindungsgemäße Dockingaufnahme 31 (erste Kopplungseinrichtung) einer Dockingvorrichtung 30 (Kopplungsvorrichtung) zum Aufnehmen eines Dockingeinschubes 32 (zweite Kopplungseinrichtung) anhand eines Ausführungsbeispiels beispielhaft beschrieben (Figur 1 bis 3 und 9 bis 11).

Die Dockingaufnahme 31 umfasst eine in etwa U-förmige Vorzentriereinrichtung 33 mit einer sich in einer Einführrichtung 34 in etwa konisch verjüngenden Einführwanne 35 zum Vorzentrieren eines korrespondierend zur Dockingaufnahme ausgebildeten Dockingeinschubes 32.

Weiterhin sind zumindest eine erste und eine zweite Zentriereinrichtung 36, 37 an der Dockingaufnahme 31 vorgesehen, wobei die erste und die zweite Zentriereinrichtung 36, 37 jeweils zwei Kopplungselemente und/oder Gegenkopplungselemente zum Verbinden mit entsprechenden Kopplungselementen und/oder Gegenkopplungselementen eines Dockingeinschubes 32 umfassen.

Weiterhin sind die erste und die zweite Zentriereinrichtung 36, 37 zum Zentrieren des Dockingeinschubes 32 bezüglich der Dockingaufnahme 31 entlang von vier Zentrierachsen 38 entsprechend der vier Kopplungs- bzw. Gegenkopplungselemente in der Einführrichtung 34 ausgebildet. Zudem umfasst die Dockingaufnahme 31 eine Einzugseinrichtung mit zwei hydraulisch betätigbaren Fanghaken 44 zum Einziehen des Dockingeinschubes 32 in die Dockingaufnahme 31 in der Einführrichtung 34.

Die Dockingaufnahme 31 umfasst zwei sich in vertikaler Richtung erstreckende und in horizontaler Richtung versetzt zueinander angeordnete Dockingwandungen 39, 40.

Diese beiden Dockingwandungen 39, 40 sind über eine sich in etwa in horizontaler Richtung erstreckende Einführwanne 35 miteinander verbunden.

Dementsprechend sind eine erste Dockingwandung 39 in vertikaler Richtung im Bereich unterhalb der Einführwanne 35 und eine zweite Dockingwandung als Begrenzung der Einführwanne 35 in horizontaler Richtung oberhalb der Einführwanne 35 angeordnet.

Die Einführwanne 35 übernimmt die Aufgabe der Vorzentrierung beim Einführen eines Dockingeinschubes in die Dockingaufnahme durch Aufnahme eines korrespondierend zur Einführwanne 35 ausgebildeten Körpers des Dockingeinschubes 32.

Zum Vorzentrieren des Dockingeinschubes 32 beim Einführen in die Dockingaufnahme 31 verjüngt sich die Geometrie der Einführwanne 35 in Einführrichtung 34, um eine Vorzentrierung des Dockingeinschubes zu ermöglichen.

An beiden Seiten der Einführwanne 35 sind in etwa quer zur Einführrichtung 34 sich in vertikaler Richtung erstreckende innere und äußere Seitenwandungen 41, 42 vorgesehen. Diese inneren und äußeren Seitenwandungen 41, 42 sind unter einem vorbestimmten Winkel in Einführrichtung 34 derart angeordnet, dass sich ein Aufnahmeraum 43, begrenzt durch die inneren Seitenwandungen 41 und die Einführwanne 35, in Einführrichtung verjüngt.

In den inneren Seitenwandungen 41 sind Fangzapfenführungen 45 ausgebildet, die zum Führen und Aufnehmen entsprechender, an einem Dockingeinschub 32 ausgebildeter Fangzapfen vorgesehen sind.

In den inneren und äußeren Seitenwandungen 41, 42 sind in entsprechenden Bohrungen Wellen angeordnet, auf denen die Fanghaken 44 drehbar gelagert sind.

Somit sind die Fanghaken in einem durch die inneren und äußeren Seitenwandungen begrenzten Fanghakenraum angeordnet. Die Fanghaken sind von entsprechenden Fanghakenzylindern 46 betätigbar.

Im Bereich der ersten Dockingwandung 39 sind buchsenförmige Zentrierzapfenaufnahmen 47 (Gegenkopplungselemente) vorgesehen, die die erste Zentriereinrichtung 36 der Dockingaufnahme 31 ausbilden.

In Einführrichtung 34 ist zunächst die erste Dockingwandung 39 vorgesehen, die zwei Bohrungen 48 zur Aufnahme der buchsenförmigen Zentrierzapfenaufnahmen 47 aufweist.

In den Bohrungen 48 sind die buchsenförmigen Zentrierzapfenaufnahmen 47 angeordnet.

Die buchsenförmigen Zentrierzapfenaufnahmen 47 sind somit in Einführrichtung 34 hinter der ersten Dockingwandung 39 angeordnet.

Die buchsenförmigen Zentrierzapfenaufnahmen 47 umfassen in Einführrichtung 34 einen rohrförmigen Einführ-/Zentrierabschnitt 49 und einen Sicherungsabschnitt 54.

Der rohrförmige Einführ-/Zentrierabschnitt 49 weist eine sich kegelförmig verjüngende Einführausnehmung 50 auf, wobei eine entgegen der Einführrichtung 34 angeordnete vertikale Stirnfläche aus der ersten Dockingwandung 39 hervorsteht und eine erste axiale Anschlagfläche 51 einer ersten Anschlageinrichtung 52 ausbildet. In dieser kreisringförmigen ersten Anschlagfläche 51 sind radial umlaufend und gleich beabstandet voneinander Schmutzabführnuten 53 zum Aufnehmen und Abführen von Verunreinigungen ausgebildet.

Derartige Verschmutzungen würden die Position des Anschlages verändern. Dies ist dahingehend nachteilig, dass keine exakte Kopplung zwischen Dockingaufnahme und Dockingeinrichtung möglich ist.

Der rohrförmige Einführ-/Zentrierabschnitt 49 weist eine sich in Einführrichtung 34 an die Einführausnehmung anschließende zylindrische Zentrierausnehmung 55 auf.

Der rohrförmige Sicherungsabschnitt 57 weist an einer entgegen der Einführrichtung 34 liegenden kreisringförmigen Stirnfläche Bohrungen 56 zum Verbinden mit der ersten Dockingwandung 39, bspw. mittels entsprechender Schraubenverbindungen, auf. Diese Stirnfläche weist einen größeren Durchmesser als der rohrförmige Einführ-/Zentrierabschnitt 49 auf und bildet auf diese Weise eine radial umlaufende Anschlagschulter aus, die ein Verschieben der buchsenförmigen Zentrieraufnahme entgegen der Einführrichtung 34 verhindert.

Diese Ausführung hat den Vorteil, dass die Längskräfte die einerseits von Anbaugeräten eingeleitet werden und andererseits durch die Keilkräfte der Keilgabeln überlagert werden, nicht über einen Schraubverband in die Dockingaufnahme eingeleitet werden müssen.

Weiterhin sind im rohrförmigen Sicherungsabschnitt 57 sich in vertikaler Richtung erstreckende Nuten 58 zur Aufnahme von hydraulisch betätigbaren Keilgabeln 59 vorhanden.

Die Keilgabeln 59 sind zum Fixieren eines entsprechenden Zentrierzapfens 71 eines Dockingeinschubes 32 vorgesehen und in vertikaler Richtung von einer Freigabestellung in eine Fixierstellung verschiebbar. Die Keilgabeln 59 bilden somit eine axiale Sicherungseinrichtung 60 aus.

In etwa mittig in der ersten Dockingwandung 39 ist im Bereich zwischen den beiden buchsenförmigen Zentrierzapfenaufnahmen 47 eine Antriebswellenkopplungseinrichtung 67 vorgesehen. Eine Antriebswellenkopplungseinrichtung 67 ist ein Teil einer Antriebswellenverbindungsvorrichtung zum Verbinden eines fahrzeugseitigen Endes einer Antriebswelle mit einem anbaugeräteseitigen Ende einer Antriebswelle.

In der zweiten Dockingwandung 40 ist eine Ausnehmung 66 zur Aufnahme einer Kupplungsplatte zum Bereitstellen von elektrischen, elektronischen, hydraulischen und/oder pneumatischen Verbindungen zwischen einem Fahrzeug und einem Anbaugerät ausgebildet.

Die Kupplungsplatte mit angeflanschtem Ventilblock kann durch Lösen von nur vier Schrauben zu Reparaturzwecken sehr einfach und schnell entgegen der Einführrichtung 34 ausgebaut werden.

Weiterhin sind im Bereich der zweiten Dockingwandung 40 zwei sich entgegen der Einführrichtung 34 erstreckende Zentrierzapfen 61 (Kopplungselemente) vorgesehen, die die zweite Zentriereinrichtung 37 der Dockingaufnahme 31 ausbilden.

Die Zentrierzapfen 61 weisen in Einführrichtung einen 34 kegelförmigen Einführabschnitt 62 und einen sich daran anschließenden zylindrischen Zentrierabschnitt 63 auf.

Eine in Einführrichtung 34 vorne liegende sich an den Zentrierabschnitt 63 anschließende kreisringförmige vertikale Stirnfläche bildet eine zweite Anschlagfläche 64 einer zweiten Anschlageinrichtung 65 aus.

Die Kopplungselemente und/oder die Gegenkopplungselemente der ersten und der zweiten Zentriereinrichtung bilden somit zumindest zwei axiale Anschlageinrichtungen auf-weisenaus, die eine Relativbewegung zwischen Dockingaufnahme und Dockingeinschub in Einführrichtung begrenzen.

Die Anschläge sind vorzugsweise an den ersten und/oder zweiten Zentrierzapfen und/oder an den ersten und/oder zweiten Zentrierausnehmungen sich in einer Ebene senkrecht zur Einführrichtung erstreckenden kreisringförmigen Anschlagflächen ausgebildet.

In etwa mittig in der zweiten Dockingwandung 40 ist im Bereich zwischen den beiden Zentrierzapfen 66 eine Zapfwellenkopplungseinrichtung 68 vorgesehen. Eine Zapfwellenkopplungseinrichtung 68 ist ein Teil einer Zapfwellenverbindungsvorrichtung zum Verbinden eines fahrzeugseitigen Endes einer Zapfwelle mit einem anbaugeräteseitigen Ende einer Zapfwelle.

Die Dockingaufnahme wird über eine große (Durchmesser ca. 258 mm), mechanisch bearbeitete Bohrung in der ersten Platte auf einem Zentrieransatz an einem Zentralrohrflansch eines Achsmittelstücks positioniert. Diese Präzision ermöglicht, dass für die Verbindung des Zapfwellenabtriebs des Getriebes und der Zapfwellenkopplungseinrichtung 68 eine Verbindungswelle mit verzahnten Muffen verwendet werden kann. Eine teure und vor allem nicht wartungsfreie Verbindung mittels einer Kardanwelle ist dadurch nicht notwendig.

Im Folgenden wird der erfindungsgemäße Dockingeinschub 32 beispielhaft beschrieben. Der Dockingeinschub 32 ist korrespondierend zur Dockingaufnahme 31 ausgebildet.

Der Dockingeinschub 32 weist in Einführrichtung 34 zunächst eine erste Dockingwandung 70 auf. Die erste Dockingwandung 70 erstreckt sich im Wesentlichen in vertikaler Richtung und weist unterseitig eine zur Einführwanne 35 der Dockingaufnahme 31 korrespondierend ausgebildete Unterwandung 89 auf.

Weiterhin ist an der ersten Dockingwandung 70 in etwa mittig eine Antriebswellenkopplungseinrichtung vorgesehen.

Korrespondierend zu den Zentrierzapfenaufnahmen 47 der ersten Zentriereinrichtung 36 der Dockingaufnahme 31 sind an der ersten Dockingwandung 70 des Dockingeinschubs 31 sich in Einführrichtung 34 erstreckende erste Zentrierzapfen 71 einer ersten Zentriereinrichtung 72 des Dockingeinschubes 32 ausgebildet.

Die ersten Zentrierzapfen 71 weisen in Einführrichtung 34 einen zylindrischen Zentrierabschnitt 73 und einen sich daran anschließenden kegelförmigen Einführabschnitt 75 auf.

Weiterhin weisen die ersten Zentrierzapfen 71 entgegen der Einführrichtung kreisringförmige erste Anschlagflächen 93 auf, die eine erste Anschlageinrichtung 94 der ersten Zentriereinrichtung 72 ausbilden.

Im zylindrischen Zentrierabschnitt 73 sind sich in vertikaler Richtung erstreckende und konvex und korrespondierend zu den Keilgabeln 59 ausgebildete Keilgabelaufnahmenuten 74 vorgesehen.

An der ersten Dockingwandung ist ein sich in Einführrichtung erstreckender Einführkörper zum Anordnen im Aufnahmeraum 43 der Dockingaufnahme 31 vorgesehen.

In Einführrichtung vorne weist der Einführkörper eine sich in etwa in vertikaler Richtung erstreckende zweite Dockingwandung 76 auf.

In der zweiten Dockingwandung sind korrespondierend zu den zweiten Zentrierzapfen 61 der zweiten Zentriereinrichtung 37 der Dockingaufnahme 31 entsprechende Zentrierzapfenaufnahmen 77 einer zweiten Zentriereinrichtung 78 des Dockingeinschubes 32 ausgebildet.

Die zweite Dockingwandung 76 weist zwei Bohrungen 80 zur Aufnahme der buchsenförmigen Zentrierzapfenaufnahmen 77 auf.

In den Bohrungen 80 sind die buchsenförmigen Zentrierzapfenaufnahmen 77 angeordnet.

Die buchsenförmigen Zentrierzapfenaufnahmen 77 umfassen in Einführrichtung 34 einen Zentrierabschnitt 82 und einen Einführabschnitt 81.

Der rohrförmige Einführabschnitt 81 weist eine sich kegelförmig verjüngende Einführausnehmung 83 auf, wobei eine entgegen der Einführrichtung 34 angeordnete Stirnfläche aus der zweiten Dockingwandung 76 hervorsteht und einen zweite axiale Anschlagfläche 84 einer zweiten Anschlageinrichtung 85 ausbildet. In dieser kreisringförmigen zweiten Anschlagfläche 85 sind radial umlaufend und gleich beabstandet voneinander Schmutzabführnuten 86 zum Aufnehmen und Abführen von Verunreinigungen ausgebildet.

Der rohrförmige Zentrierabschnitt 82 weist eine sich entgegen der Einführrichtung 34 an die Einführausnehmung 83 anschließende zylindrische Zentrierausnehmung 87 auf.

Im Bereich zwischen diesen Zentrierzapfenausnehmungen 77 ist eine Zapfwellenkopplungseinrichtung (68) angeordnet.

Im Bereich in vertikaler Richtung oberhalb der zweiten Zentriereinrichtung 78 ist eine Kupplungsplattenaufnahme ausgebildet.

Weiterhin ist am Einführkörper eine sich quer zur Einführrichtung 34 erstreckende Fangzapfenwelle 88 angeordnet. Die Enden der Welle bilden Fangzapfen 89 aus. Diese Fangzapfen 89 werden beim Einführen des Dockingeinschubes 32 in die Dockingaufnahme 31 von den Fanghaken 44 der Dockingaufnahme 31 erfasst und anschließend wird mittels der hydraulisch betätigbaren Fanghaken 44 der Dockingeinschub 32 in die Dockingaufnahme 32 gezogen, wobei eine Unterwandung 90 des Einführkörpers des Dockingeinschubes 32 entsprechend in der Einführwanne 35 der Dockingaufnahme 31 gleitet.

Neben einer axialen Verriegelung als Sicherungseinrichtung 60 weisen die hydraulischen Keilgabeln noch eine sich quer zur Einführrichtung erstreckende zweite Verriegelungseinrichtung auf. Die zweite Verriegelungseinrichtung umfasst einen pneumatisch betätigbaren Sicherungskörper, der die Keilgabeln in den Zentrierzapfenbuchsen fixiert.

Diese zweite Verriegelung kann nur erfolgen, wenn die hydraulische Keilgabel korrekt positioniert ist. Dementsprechend ist ein Sensor vorgesehen, um die Stellung der hydraulischen Keilgabel zu überprüfen.

Keilgabeln haben den Vorteil, dass sie gut automatisierbar sind. Die Keilgabeln sind zu jedem Zeitpunkt in den Keilgabelnuten geführt.

Gemäß einer alternativen Ausführungsform kann auch vorgesehen sein, dass die Zentriereinrichtungen bzw. deren Zentrierelemente (Zapfen, Buchsen) vertauscht sind.

Hierbei ist lediglich von entscheidender Bedeutung, dass sowohl die beiden Zentrierzapfen bzw. Zentrierausnehmungen der ersten und der zweiten Zentriereinrichtungen derart ausgebildet sind, dass alle vier Komponenten ein gleichzeitiges Zentrieren ermöglichen, da ein am Dockingeinschub angeordnetes Anbaugerät häufig ein sehr hohes Gewicht aufweist und dementsprechend eine genaue Zentrierung in axialer Einführrichtung notwendig ist.

Im Folgenden wird eine Kupplungsplatte 100 beschrieben.

Eine Kupplungsplatte 100 ist zum Ausbilden von elektrischen, elektronischen, hydraulischen und/oder pneumatischen Verbindungen vorgesehen.

Diese Kupplungsplatte 100 umfasst eine in etwa ebenflächige Basisplatte 101. Diese Basisplatte 101 kann mit einer Vielzahl von elektrischen, elektronischen, hydraulischen und/oder pneumatischen sowie mechanischen Verbindungselementen versehen sein.

An der Basisplatte 101 sind zumindest zwei hydraulische Anschlusseinrichtungen 113 ausgebildet.

Diese beiden hydraulischen Anschlusseinrichtungen 113 sind zum Betätigen von nahezu an allen verbindbaren Modulen vorhandenen Stützfußzylindern vorgesehen.

Zudem ist an der Basisplatte 101 zumindest eine elektronische Verbindungseinrichtung 102 zum Bereitstellen einer elektronischen Verbindung zwischen einer Steuereinrichtung eines Fahrzeuges und einer Steuereinrichtung eines Fahrzeuges vorgesehen. Diese elektronische Verbindung dient zum Identifizieren der Art des Modules bzw. des Anhängers bzw. des Anbaugerätes.

Weiterhin ist an der Basisplatte 101 zumindest eine elektrische Verbindungseinrichtung 103 angeordnet.

Diese elektrische Verbindungseinrichtung ist zum Betätigen eines Lichtes (z.B. Brems-, Vorder-, Rück-, Positions- oder Warnlicht) am Anbaumodul vorgesehen.

Weiterhin sind zwei elektrische Kontrollkontakte 104 die durch Koppeln des Dockingeinschubes 32 mit der Dockingaufnahme 31 miteinander elektrisch verbunden werden, um zu detektieren, ob der Dockingeinschub 32 vollständig in die Dockingaufnahme 31 eingezogen ist und eine Sicherungs- und/oder Verriegelungseinrichtung aktiviert werden kann

Neben den vorstehend genannten Mindestverbindungseinrichtungen weist die Kupplungsplatte eine Zentriereinrichtung 105 auf. Diese Zentriereinrichtung 105 umfasst, wenn die Kupplungsplatte 100 für die Dockingaufnahme 31 vorgesehen ist, zumindest zwei Zentrierzapfen 106, wobei entsprechend an einer Kupplungsplatte des Dockingeinschubes 32 die korrespondierenden Zentrierausnehmungen 107 ausgebildet sind.

Die Zentriereinrichtung umfasst zumindest zwei Kopplungs- (Zentrierzapfen 106) und/oder Gegenkopplungselemente (Zentrierausnehmung 107).

Weiterhin sind in einer Kupplungsplatte 100 drei Verbindungsbohrungen 108 zum Verbinden der Kupplungsplatte 100 mit einem Dockingeinschub 32 oder einer Dockingaufnahme 31 vorgesehen.

In diesen Verbindungsbohrungen 108, vorzugsweise des Dockingeinschubes 32, sind rohrförmige Kunststoffbuchsen 109 bzw. Gummilager vorgesehen, aus einem elastischen Material anordbar, um ein geringes Spiel zu ermöglichen und so beim Verbinden zweier Kupplungsplatten die Präzision zu erhöhen.

In entsprechenden Ausnehmungen 110 der Kunststoffbuchsen 109 sind Verbindungsmittel 111, wie z.B. Schrauben, anordbar, um die Kupplungsplatte 100 mit einer Kopplungseinrichtung, wie z.B. einem Dockingeinschub 32 oder einer Dockingaufnahme zu verbinden.

Die Kunststoffbuchsen 109 bilden in Verbindung mit den Verbindungsmitteln 111 eine Lagerungseinrichtung 112 aus.

In der Basisplatte 101 sind auch pneumatische Verbindungseinrichtungen 114 vorgesehen.

Im Folgenden werden Merkmale der Kupplungsplatte näher beschrieben.

Eine fahrzeugseitig ausgebildete Kupplungsplatte 100 umfasst die in etwa ebenflächige Basisplatte 101, bei der anbaugeräteseitig elektrische Verbindungseinrichtung 103 und/oder elektronische Verbindungseinrichtung 102, wie z.B. Elektrostecker 102, hydraulische Anschlusseinrichtungen 113, wie z.B. Hydraulikkupplungen 113, und pneumatische Verbindungseinrichtungen 114, wie z.B. Druckluftkupplungen sowie Zentrierzapfen 106 zur Feinzentrierung der anbaugeräteseitigen Kupplungsplatte integriert sind.

Fahrzeugseitig ist ein Ventilblock 115 mit bis zu sechs doppeltwirkenden hydraulischen Steuergeräten (nicht dargestellt) angeflanscht.

Die Kupplungsplatte 100 ist hydraulisch derart ausgeführt, dass für eine Arbeitshydraulik nur die Druck-, Tank- und Lastmeldeleitungen angeschlossen sind. Die Leitung zwischen diesen Hauptanschlüssen und den Kupplungen eines Power-Beyond-Systems sowie der Versorgung des Ventilblocks 115 ist in die Basisplatte 101 integriert.

Die Basisplatte 101 ist über Verbindungsmittel 111 fest mit einer fahrzeugseitigen Dockingaufnahme 31 verschraubt.

Die geräteseitige Kupplungsplatte 100 am Dockingeinschub umfasst die entsprechenden Gegenstecker und Kupplungen und ist über die Lagerungseinrichtung 112 bzw. die Kunststoffbuchsen 109 und die Verbindungsmittel 111 fest mit einem Dockingeinschub 32 verbunden.

Die Lagerungseinrichtung 112 ist somit zum Bereitstellen eines geringfügigen Spiels der Kupplungsplatte in einer vertikalen und einer horizontalen Ebene bezüglich einer Kopplungseinrichtung ausgebildet. Das ermöglicht der Kupplungsplatte 100, sich über die Kunststoffbuchsen 109 bzw. Gummibuchsen und die darin vorgesehenen Bohrungen sich gegenüber den fahrzeugseitigen Zentrierzapfen 106 fein zu zentrieren, um eine für die Hydraulikkupplung erforderliche präzise Ausrichtung im Bereich von 0,05 mm zu erreichen.

Beim Verbinden zweier erfindungsgemäßer Kupplungsplatten, die zum Verbinden eines Fahrzeuges mit einem Anbaugerät ausgebildet sind, werden beim Koppeln gleichzeitig folgende Verbindungen hergestellt:
- Elektrische Verbindungen (Beleuchtung, elektrische Leistungsversorgung)
- elektronische Verbindungen (CAN-BUS, ggfs. ISO-BUS, Ethernet)
- hydraulische Verbindungen für Fahrzeughydraulik und Arbeitshydraulik
- bis zu sechs doppelt wirkende hydraulische Steuergeräte mit einem maximalen Durchfluss von jeweils 100 I pro Minute
- Power-Beyond-Anschluss mit einem maximalen Durchfluss von 180 I pro Minute
- hydraulische Anschlüsse für Stützfüße am Anbaugerät
- Druckluftversorgung
- Druckluftbremse für kuppelbare Zusatzachsmodule und/oder Anhänger bzw. Anbaugeräte.

Das Verbinden zweier erfindungsgemäßer Kupplungsplatten 100 erfolgt indem ein Dockingeinschub 32 mit einer Dockingaufnahme 31 verbunden wird.

Beim Verbinden zweier erfindungsgemäßer Kupplungsplatten 100 ist demgemäß vorgesehen, dass die Zentrierzapfen 106 einer mit einer Dockingaufnahme 31 verbundenen Kupplungsplatte 100 in die entsprechenden Zentrierausnehmungen 105 einer mit einem Dockingeinschub 32 verbundenen erfindungsgemäßen Kupplungsplatte eindringen und auf diese Weise die beiden Kupplungsplatten 100 insbesondere in einer vertikalen Verbindungsebene präzise zueinander ausrichten.

Auf diese Weise werden sämtliche an Dockingeinschub 32 und Dockingaufnahme 31 vorgesehenen elektrischen, elektronischen, hydraulischen und/oder pneumatischen Verbindungen miteinander verbunden.

Im Folgenden wird ein Verfahren zum Docking bzw. ein Einführen des Dockingeinschubes in die Dockingaufnahme bzw. ein erfindungsgemäßes Verfahren zum Verbinden eines Dockingeinschubes mit einer Dockingaufnahme beschrieben.

Zunächst wird der Einführkörper des Dockingeinschubes 32 im Bereich des Aufnahmeraums 43 der Dockingaufnahme 31, vorzugsweise durch Verfahren des Fahrzeuges und somit der daran angeordneten Dockingaufnahme 31, angeordnet.

Dabei erfolgt eine Vorzentrierung des Dockingeinschubes in der Dockingaufnahme anhand des Gleitens der Unter- bzw. Einführwandung 90 des Dockingeinschubes 32 in der Einführwanne 35 der Dockingaufnahme 31.

Nachdem eine Relativbewegung in Einführrichtung über eine vorbestimmte Länge erfolgt ist, werden die Fanghaken 44 der Dockingaufnahme mittels der Fanghakenzylinder 46 betätigt und zunächst in vertikaler Richtung nach unten abgesenkt, so dass Fangausnehmungen 69 der Fanghaken 44 die Fangzapfen 89 des Dockingeinschubes hintergreifen.

Das Bewegen des Dockingeinschubes in die Dockingaufnahme erfolgt somit zunächst durch Bewegen des Fahrzeuges. Dabei erfolgt eine Vorzentrierung. Anschließend rasten die Fanghaken ein und ziehen den Dockingeinschub in Einführrichtung in die Dockingaufnahme.

Zwei Rollen, die in der Dockingaufnahme drehbar gelagert sind, bilden mit einem Schlitz im Fanghaken und einer Bahn auf der Oberseite des Fanghakens eine Kulissenführung. Diese Kulissenführung bewirkt, dass sich die Fanghaken beim Ausfahren zuerst in Fahrzeuglängsrichtung und anschließend nach oben bewegen. Dadurch ergibt sich eine Öffnung in die beim Einfahren in den Dockingeinschub die Fangzapfen eingeführt werden. Beim Einziehen der Fanghaken bewegen sich die Haken zuerst nach unten und verhaken sich mit den Fangzapfen. Anschließend wird der Dockingeinschub eingezogen.

Anschließend gleiten die Fangzapfen entlang einer Fangzapfenführung 45 in den inneren Seitenwandungen 41 der Dockingaufnahme 31, wobei die Fangzapfen 89 in der Fangzapfenführung 45 lediglich mit geringem Spiel angeordnet sind.

Durch eine weitere Bewegung des Dockingeinschubes 31 in Einführrichtung 34 erfolgt anschließend eine weitere Zentrierung des Dockingeinschubes 32 in der Dockingaufnahme 31 über die ersten und zweiten Zentriereinrichtungen 36, 37, 72, 78 der Dockingaufnahme 31 und des Dockingeinschubes 32 entlang der vier Zentrierachsen 38.

Dabei gleiten die zwei Zentrierzapfen 71 der ersten Zentriereinrichtung 72 des Dockingeinschubes 32 mit ihren kegelförmigen Zentrierabschnittabschnitten 75 in die kegelförmigen Einführöffnungen 50 der zwei Zentrierzapfenaufnahmen 47 der ersten Zentriereinrichtung 36 der Dockingaufnahme 31.

Gleichzeitig gleiten die kegelförmigen Flächen der Einführabschnitte 62 der Zentrierzapfen 61 der zweiten Zentriereinrichtung 37 der Dockingaufnahme 31 in die Einführausnehmungen 83 der Zentrierzapfenaufnahmen 77 der zweiten Zentriereinrichtung 78 des Dockingeinschubes.

Durch eine weitere Bewegung des Dockingeinschubes 31 in Einführrichtung 34 erfolgt anschließend eine weitere Feinzentrierung des Dockingeinschubes 32 in der Dockingaufnahme 31.

Dabei gleiten die zwei Zentrierzapfen 71 der ersten Zentriereinrichtung 72 des Dockingeinschubes 32 mit ihren zylindrischen Zentrierabschnitten 73 in die zylindrischen Zentrierausnehmungen 55 der zwei Zentrierzapfenaufnahmen 47 der ersten Zentriereinrichtung 36 der Dockingaufnahme 31.

Gleichzeitig gleiten die zylindrischen Zentrierabschnitte 63 der Zentrierzapfen 61 der zweiten Zentriereinrichtung 37 der Dockingaufnahme 31 in die Zentrierausnehmungen 87 der Zentrierzapfenaufnahmen 77 der zweiten Zentriereinrichtung 78 des Dockingeinschubes.

Die Bewegung des Dockingeinschubes 32 in Einführrichtung 34 hin zur Dockingaufnahme 31 wird durch die ersten Anschlagflächen 51, 93 der ersten Anschlageinrichtungen 52, 94 der ersten Zentriereinrichtung 36, 72 begrenzt.

Weiterhin wird die Bewegung des Dockingeinschubes 32 in Einführrichtung 34 hin zur Dockingaufnahme 31 durch die zweiten Anschlagflächen 64, 84 der zweiten Anschlageinrichtungen 65, 85 der ersten Zentriereinrichtung 36, 72 begrenzt.

Sobald die Anschlagflächen 51, 93 der ersten Anschlageinrichtungen 52, 94 und die Anschlagflächen 64, 84 der zweiten Anschlageinrichtung 65, 85 aneinander anstehen, ist das Einführen des Dockingeinschubes 32 in die Dockingaufnahme 31 in axialer Richtung begrenzt.

Der Dockingeinschub 32 ist nun vollständig in die Dockingaufnahme 31 eingeführt.

Vorzugsweise sind sowohl am Dockingeinschub 32 als auch an der Dockingaufnahme 31 elektrische Kontakte (nicht dargestellt) vorgesehen, die einander kontaktieren, sobald der Dockingvorgang beendet ist. Ein auf diese Weise generiertes Signal wird verwendet, um die Betätigungszylinder 95 der hydraulisch betätigbaren Keilgabeln 59 in vertikaler Richtung nach unten derart zu verschieben, dass Gabeln der Keilgabeln 59 in die Nuten 58 des Sicherungsabschnittes 57 der ersten Zentrierzapfen 71 der ersten Zentriereinrichtung 72 des Dockingeinschubes eingreifen und zusätzlich zu den Fanghaken 44 ein Auskoppeln des Dockingeinschubes 32 aus der Dockingaufnahme 31 verhindern.

Zur Sicherung der Keilgabeln ist eine pneumatisch betätigbare Verriegelungseinrichtung 91 vorgesehen, die entsprechende Verriegelungszapfen 96 durch im Sicherungsabschnitt 57 und in den Gabeln der Keilgabel 59 ausgebildete Verriegelungsbohrungen 97 anbringen und auf diese Weise die Position der Keilgabeln 59 fixieren und sichern.

Gleichzeitig sind in dieser Endstellung ggf. Zapfwellenkopplungseinrichtungen und/oder Antriebswellenverbindungeinrichtungen der Dockingaufnahme 31 und des Dockingeinschubes 32 miteinander verbunden.

### Bezugszeichenliste

- 30: Dockingvorrichtung
- 31: Dockingaufnahme
- 32: Dockingeinschub
- 33: Vorzentriereinrichtung
- 34: Einführrichtung
- 35: Einführwanne
- 36: erste Zentriereinrichtung
- 37: zweite Zentriereinrichtung
- 38: Zentrierachsen
- 39: erste Dockingwandung
- 40: zweite Dockingwandung
- 41: innere Seitenwandung
- 42: äußere Seitenwandung
- 43: Aufnahmeraum
- 44: Fanghaken
- 45: Fangzapfenführung
- 46: Fanghakenzylinder
- 47: Zentrierzapfenaufnahme
- 48: Bohrung
- 49: Einführ-/Zentrierabschnitt
- 50: kegelförmige Einführöffnung
- 51: erste axiale Anschlagfläche
- 52: erste Anschlageinrichtung
- 53: Schmutzabführnuten
- 54: rohrförmiger Zentrierabschnitt
- 55: zylindrische Zentrierausnehmung
- 56: Bohrung
- 57: Sicherungsabschnitt
- 58: Nuten
- 59: Keilgabel
- 60: axiale Sicherungseinrichtung
- 61: Zentrierzapfen
- 62: Einführabschnitt
- 63: Zentrierabschnitt
- 64: zweite Anschlagfläche
- 65: zweite Anschlageinrichtung
- 66: Ausnehmung
- 67: Antriebswellenkopplungseinrichtung
- 68: Zapfwellenkopplungseinrichtung
- 69: Fangausnehmungen
- 70: erste Dockingwandung
- 71: erster Zentrierzapfen
- 72: erste Zentriereinrichtung
- 73: zylindrischer Zentrierabschnitt
- 74: Keilgabelaufnahmenut
- 75: kegelförmigen Zentrierabschnitt
- 76: zweite Dockingwandung
- 77: Zentrierzapfenaufnahme
- 78: zweite Zentriereinrichtung
- 79: Kupplungsplattenaufnahme
- 80: Bohrung
- 81: Sicherungsabschnitt
- 82: Zentrierabschnitt
- 83: Einführausnehmung
- 84: zweite Anschlagfläche
- 85: zweite Anschlageinrichtung
- 86: Schmutzabführnut
- 87: Zentrierausnehmung
- 88: Fangzapfenwelle
- 89: Fangzapfen
- 90: Unterwandung
- 91: Verriegelungseinrichtung
- 92: Keilgabelaufnahmenut
- 93: erste Anschlagfläche
- 94: erste Anschlageinrichtung
- 95: Betätigungszylinder Keilgabel
- 96: Verriegelungszapfen
- 97: Verriegelungsbohrung
- 100: Kupplungsplatte
- 101: Basisplatte
- 102: elektronische Verbindungseinrichtung
- 103: elektrische Verbindungseinrichtung
- 104: elektrischer Kontrollkontakt
- 105: Zentriereinrichtung
- 106: Zentrierzapfen
- 107: Zentrierausnehmung
- 108: Verbindungsbohrung
- 109: Kunststoffbuchse
- 110: Ausnehmung
- 111: Verbindungsmittel
- 112: Lagerungseinrichtung
- 113: hydraulische Anschlusseinrichtung
- 114: pneumatische Verbindungseinrichtung
- 115: Ventilblock

## Patentansprüche

1. Dockingvorrichtung (30) mit einer ersten Dockingeinrichtung (31) und einer zweiten Dockingeinrichtung (32), wobei
die erste Dockingeinrichtung(31) eine in etwa U-förmige Vorzentriereinrichtung (33) mit einer sich konisch verjüngenden Einführwanne (35) besitzt und zumindest eine erste und eine zweite Zentriereinrichtung (36, 72), wobei die erste und die zweite Zentriereinrichtung (36, 72) jeweils Kopplungselemente oder Gegenkopplungselemente umfassen, und
mit einer zweiten Dockingeinrichtung (32) mit einem Vorzentrierkörper mit einer sich in einer Einführrichtung etwa konisch verjüngenden und in horizontaler Richtung erstreckenden Einführfläche (90) mit zumindest einer ersten und einer zweiten Zentriereinrichtung( 37, 78), wobei die erste und die zweite Zentriereinrichtung (37, 78) jeweils zwei Kupplungselemente und/oder Gegenkupplungselemente umfassen, die zum Zentrieren der zweiten Dockingeinrichtung (32) in der ersten Dockingeinrichtung (31) dienen, **dadurch gekennzeichnet, dass**
die erste Zentriereinrichtung (36) zwei Gegenkopplungselemente (47, 71) aufweist, die als buchsenförmige erste Zentrierausnehmungen (47) und korrespondierend zu den Zentrierzapfenaufnahmen (47) der ersten Zentriereinrichtung (36) ausgebildete Zentrierzapfen (71) aufweist, wobei
eine Fixiereinrichtung (60) in einem Fixierbereich der ersten Zentrierausnehmungen (47) vorgesehen ist, wobei die Fixiereinrichtung (60) zum axialen Fixieren von ersten Zentrierzapfen (61) eines Dockingeinschubes (32) in den korrespondierend ausgebildeten ersten Zentrierausnehmungen (47) der Dockingaufnahme (31) ausgebildet ist und wobei die Fixiereinrichtung (60) zum Fixieren hydraulisch betätigbare Keilgabeln (59) aufweist, die in vertikaler Richtung derart verschiebbar sind, dass Fixierflächen der Keilgabeln (59) in entsprechende Fixiernuten (74) der Zentrierzapfen (61) eingreifen.

2. Dockingvorrichtung nach Anspruch 1,
**dadurch gekennzeichnet,**
**dass** bei der ersten Dockingeinrichtung (31) in einer Einführrichtung (34) hinten an der Einführwanne (35) in einer sich quer zur Einführrichtung (34) erstreckenden Ebene eine zweite Dockingwandung (40) angeformt ist, in der eine Dockingausnehmung (66) zum Aufnehmen einer in Einführrichtung fixierten Kupplungsplatte (100) ausgebildet ist und bei der zweiten Dockingeinrichtung (32) am Einführkörper in Einführrichtung (34) vorne eine sich in einer Ebene quer zur Einführrichtung (34) erstreckende, zweite Dockingwandung (76) angeformt ist, wobei in der zweiten Dockingwandung (76) eine Dockingausnehmung zum Aufnehmen einer axial fest fixierten Kupplungsplatte (100) ausgebildet ist.

3. Dockingvorrichtung nach Anspruch 1,
**dadurch gekennzeichnet,**
**dass** in den ersten Dockingwandungen (39,70) der ersten und zweiten Dockingeinrichtung (31,32) je eine Antriebswellenkopplungseinrichtung (67)zum Verbinden einer anbaugeräteseitigen Antriebswelle mit einer fahrzeugseitigen Antriebswelle vorgesehen ist, wobei die Antriebswellenkopplungseinrichtungen (67) zum Herbeiführen einer Zwangskopplung in eingefahrenem und verriegeltem Zustand der Dockingeinrichtungen (31,32) axial fluchtend ausgebildet sind und axial jeweils festgelegt sind, so dass bei einer mechanischen Kupplung der Kopplungseinrichtungen (31, 32) eine Zwangsverbindung herbeigeführt wird.

4. Dockingvorrichtung nach einem der vorhergehenden Ansprüche,
**dadurch gekennzeichnet,**
**dass** in den jeweils zweiten Dockingwandungen (40,76) Zapfwellenkopplungseinrichtungen (68) zum Verbinden einer anbaugeräteseitigen Zapfwelle mit einer fahrzeugseitigen Zapfwelle angeordnet sind, wobei die Zapfwellenkopplungseinrichtungen (68) in gekoppeltem Zustand miteinander fluchtend ausgebildet sind und axial an den zweiten Dockingwandungen (40,76) derart festgelegt sind, dass beim Verbinden der Dockingeinrichtungen (31,32) miteinander eine Zwangsverbindung herbeigeführt wird.

5. Dockingvorrichtung nach einem der vorhergehenden Ansprüche,
**dadurch gekennzeichnet,**
**dass** die erste Dockingeinrichtung (31) als Dockingaufnahme ausgebildet ist, umfassend eine Einzugseinrichtung mit zwei hydraulisch betätigbaren Fanghaken (44).

6. Dockingvorrichtung nach einem der vorhergehenden Ansprüche,
**dadurch gekennzeichnet,**
**dass** die Zentrierzapfen (71) in Einführrichtung (34) einen kegelförmigen Zentrierabschnitt (75) und einen zylindrischen Zentrierabschnitt (73) aufweisen.

7. Dockingvorrichtung nach einem der vorhergehenden Ansprüche,
**dadurch gekennzeichnet,**
**dass** die Kopplungselemente und/oder die Gegenkopplungselemente der ersten und der zweiten Zentriereinrichtung (37, 78) zumindest zwei axiale Anschlageinrichtungen (52, 94 65, 85 ) aufweisen, die eine Relativbewegung zwischen Dockingaufnahme und Dockingeinschub begrenzen, wobei die Anschlageinrichtungen (52, 94 65, 85 ) vorzugsweise an den ersten und/oder zweiten Zentrierzapfen (71) und/oder an den ersten und/oder zweiten Zentrierausnehmungen (47) als kreisringförmige Anschlagflächen (51, 93; 64, 84) ausgebildet sind und sich in einer Ebene senkrecht zur Einführrichtung erstrecken, und wobei die axialen Anschlagflächen (51, 93; 64, 84) radial umlaufend und gleich beanstandet voneinander angeordnete Ausnehmungen aufweisen.

8. Dockingvorrichtung nach einem der vorhergehenden Ansprüche,
**dadurch gekennzeichnet,**
**dass** an der Einführwanne (35) in Einführrichtung (34) vorne eine sich in einer Ebene quer zur Einführrichtung (34) erstreckende zweite Dockingwandung (40) angeformt ist.

9. Dockingvorrichtung nach einem der vorhergehenden Ansprüche,
**dadurch gekennzeichnet,**
**dass** die erste Dockingwandung (39) in vertikaler Richtung unterhalb der Einführwanne (35) angeordnet ist.

10. Dockingvorrichtung nach einem der vorhergehenden Ansprüche,
**dadurch gekennzeichnet,**
**dass** die Einführwanne (35) zwei sich in vertikaler Richtung erstreckende Seitenwandungen (41,42) aufweist, die mit der Einführwanne (35) und der zweiten Dockingwandung (40) verbunden sind, wobei zwischen den Seitenwandungen (41,42) Fanghaken (44) drehbar gelagert sind.

11. Dockingvorrichtung nach einem der vorhergehenden Ansprüche,
**dadurch gekennzeichnet,**
**dass** die zweite Dockingeinrichtung (32) als Dockingeinschub ausgebildet ist, aufweisend einen Vorzentrierkörper mit einer sich in einer Einführrichtung (34) einer etwa konisch verjüngenden und in horizontaler Richtung erstreckenden Einführfläche (90),
und
zwei sich in horizontaler Richtung quer zur Einführrichtung erstreckende Fangzapfen (89).

12. Dockingvorrichtung nach einem der vorhergehenden Ansprüche,
**dadurch gekennzeichnet,**
**dass** an dem Einführkörper in einer Einführrichtung (34) hinten eine sich in einer Ebene quer zur Einführrichtung (34) erstreckende erste Dockingwandung (70) angeformt ist, die in vertikaler Richtung unterhalb des Einführkörpers vorgesehen ist.

13. Dockingvorrichtung nach einem der vorhergehenden Ansprüche,
**dadurch gekennzeichnet,**
**dass** in der zweiten Dockingwandung (76) eine Dockingausnehmung zum Aufnehmen einer ortsfest fixierbaren Kupplungsplatte (100) ausgebildet ist.

14. Dockingvorrichtung nach einem der vorhergehenden Ansprüche,
**dadurch gekennzeichnet,**
**dass** der Einführkörper zwei sich in vertikaler Richtung erstreckende Seitenwandungen aufweist, die mit der zweiten Dockingwandung (76) und der ersten Dockingwandung (70) verbunden sind, wobei an den Seitenwandungen die sich quer zur Einführrichtung erstreckenden Fangzapfen (89) angeordnet sind.

15. Fahrzeug mit einer ersten Dockingeinrichtung nach einem der vorhergehenden Ansprüche..

16. Anbaugerät, Anhänger oder Zusatzachse mit einer zweiten Dockingvorrichtung nach einem der vorhergehenden Ansprüche.

17. Verfahren zum Koppeln eines Fahrzeugs aufweisend eine erste oder zweite Dockingeinrichtung nach einem der Ansprüche 1 bis 16 mit einer Zusatzachse, einem Anhänger oder einem Anbaugerät aufweisend eine zweite oder erste, korrespondierende Dockingeinrichtung nach einem der Ansprüche 1 bis 16,
umfassend die folgenden Schritte
- Anordnen des Einführkörpers des Dockingeinschubs (32) im Bereich des Aufnahmeraums (43) der Dockingaufnahme (31), so dass eine Vorzentrierung des Dockingeinschubs (32) bezüglich der Dockingaufnahme (31) erfolgt,
- Betätigen der Fanghaken (44) mittels der Fanghakenzylinder (46),
- Absenken der Fanghaken (44) in vertikaler Richtung nach unten,
- Einziehen des Dockingeinschubs (32) in die Dockingaufnahme (31) mittels der Fanghaken (44),
- Zentrieren des Dockingeinschubs (32) bezüglich der Dockingaufnahme (31) entlang von vier Zentrierachsen (38) mittels der ersten und zweiten Zentriereinrichtungen (36, 37, 72, 78 ) des Dockingeinschubs (32) und der Dockingaufnahme (31), und
- Erreichen einer Endposition, wobei
- die Endposition des Dockingeinschubs (32) in der Dockingaufnahme (31) mittels einer axialen Sicherungseinrichtung (60) fixiert wird und
- die Position der Sicherungseinrichtung (60) mittels einer Verriegelungseinrichtung (91) gesperrt wird.

18. Verfahren nach Anspruch 17,
**dadurch gekennzeichnet,**
**dass** die Bewegung des Dockingeinschubs (32) in die Dockingaufnahme (31) in Einführrichtung (34) von zumindest einer axialen Anschlageinrichtung (52, 94 65, 85 ) begrenzt wird.

## Claims

1. Docking assembly (30) with a first docking device (31) and a second docking device (32), wherein
the first docking device (31) possesses an approximately U-shaped pilot centring device (33) with a conically tapering insertion trough (35) and at least one first and one second centring device (36, 72), wherein the first and the second centring device (36, 72) each comprise coupling elements or coupling counter-elements, and
with a second docking device (32) with a pilot centring body with an insertion tray (90) tapering approximately conically in an insertion direction and extending in horizontal direction, with at least one first and one second centring device (37, 78),
wherein each of the first and the second centring device (37, 78) comprises two coupling elements and/or coupling counter-elements which serve to centre the second docking device (32) in the first docking device (31), **characterised in that**
the first centring device (36) has two coupling counter-elements (47, 71) which are designed as socket-style first centring recesses (47) and centring pins (71) designed to correspond to the centring pin receptacles (47) of the first centring device (36), wherein
a fixing device (60) is provided in a fixing region of the first centring recesses (47), wherein the fixing device (60) is designed for axially fixing first centring pins (61) of a docking insert (32) in the correspondingly designed first centring recesses (47) of the docking receptacle (31) and wherein the fixing device (60) has, for the purposes of fixing, hydraulically actuated wedge forks (59) which can be displaced in vertical direction such that fixing faces of the wedge forks (59) engage in corresponding fixing grooves (74) of the centring pins (61).

2. Docking assembly according to claim 1,
**characterised in that**
a second docking wall (40) is formed in an insertion direction (34) at the rear on the insertion trough (35) in a plane extending transverse to the insertion direction (34) on the first docking device (31), in which wall a docking recess (66) is formed for receiving a coupling plate (100) fixed in insertion direction, and a second docking wall (76) extending in a plane transverse to the insertion direction (34) is formed on the second docking device (32) on the front of the insertion body in insertion direction(34), wherein a docking recess is formed in the second docking wall (76) for receiving an axial securely fixed coupling plate (100).

3. Docking assembly according to claim 1,
**characterised in that**
a drive shaft coupling device (67) is provided in the first docking walls (39, 70) of each of the first and second docking devices (31, 32) for connecting a drive shaft on the implement to a drive shaft on the vehicle, wherein the drive shaft coupling devices (67) are designed to be aligned axially in the retracted state and the locked state of the docking devices (31, 32) to establish a forced connection, and are each secured axially with the result that a forced connection is established on a mechanical coupling of the coupling devices (31, 32).

4. Docking assembly according to one of the preceding claims,
**characterised in that**
PTO shaft coupling devices (68) are arranged in each of the second docking walls (40, 76) for connecting a PTO shaft on the implement to a PTO shaft on the vehicle, wherein the PTO shaft coupling devices (68) in the coupled state are aligned with one another and are axially secured on the second docking walls (40, 76) such that a forced connection is established when connecting the docking devices (31, 32) to one another.

5. Docking assembly according to one of the preceding claims,
**characterised in that**
the first docking device (31) is designed as a docking receptacle, comprising a drawing-in device with two hydraulically actuated capture hooks (44).

6. Docking assembly according to one of the preceding claims,
**characterised in that**
the centring pins (71) have a conical centring portion (75) and a cylindrical centring portion (73) in insertion direction (34).

7. Docking assembly according to one of the preceding claims,
**characterised in that**
the coupling elements and/or the coupling counter-elements of the first and the second centring devices (37, 78) comprise at least two axial stop devices (52, 94; 65, 85) which limit a relative movement between docking receptacle and docking insert, wherein the stop devices (52, 94; 65, 85) are preferably formed on the first and/or second centring pin (71) and/or on the first and/or second centring recesses (47) as circular stop faces (51, 93; 64, 84) and extend in a plane perpendicular to the insertion direction, and wherein the axial stop faces (51, 93; 64, 84) have recesses arranged radially circumferentially and spaced equally apart from one another.

8. Docking assembly according to one of the preceding claims,
**characterised in that**
a second docking wall (40) extending in a plane transverse to the insertion direction (34) is formed on the insertion trough (35) at the front in insertion direction (34).

9. Docking assembly according to one of the preceding claims,
**characterised in that**
the first docking wall (39) is arranged in vertical direction beneath the insertion trough (35).

10. Docking assembly according to one of the preceding claims,
**characterised in that**
the insertion trough (35) comprises two side walls (41, 42) extending in vertical direction which are connected to the insertion trough (35) and the second docking wall (40), wherein capture hooks (44) are mounted rotatable between the side walls (41, 42).

11. Docking assembly according to one of the preceding claims,
**characterised in that**
the second docking device (32) is designed as a docking insert, having a pilot centring body with an insertion surface (90) tapering approximately conically in an insertion direction (34) and extending in horizontal direction, and
two capture pins (89) extending in horizontal direction transverse to the insertion direction.

12. Docking assembly according to one of the preceding claims,
**characterised in that**
a first docking wall (70) extending in a plane transverse to the insertion direction (34) is formed on the insertion body at the rear in an insertion direction (34), which wall is arranged in vertical direction beneath the insertion body.

13. Docking assembly according to one of the preceding claims,
**characterised in that**
a docking recess for receiving a coupling plate (100) which can be fixed in position is formed in the second docking wall (76).

14. Docking assembly according to one of the preceding claims,
**characterised in that**
the insertion body has two side walls extending in vertical direction which are connected to the second docking wall (76) and the first docking wall (70), wherein capture pins (89) extending transverse to the insertion direction are arranged on the side walls.

15. Vehicle with a first docking device according to one of the preceding claims.

16. Implement, trailer or additional axle with a second docking assembly according to one of the preceding claims.

17. Method for coupling a vehicle having a first or second docking device according to one of claims 1 to 16 to an additional axle, a trailer or an implement having a second or first corresponding docking device according to one of claims 1 to 16,
comprising the following steps
- arranging the insertion body of the docking insert (32) in the region of the receiving space (43) of the docking receptacle (31), with the result that the docking insert (32) is pre-centred with respect to the docking receptacle (31),
- actuating the capture hooks (44) by means of the capture hook cylinders (46),
- lowering the capture hooks (44) downwards in vertical direction,
- drawing the docking insert (32) into the docking receptacle (31) by means of the capture hooks (44),
- centring the docking insert (32) with respect to the docking receptacle (31) along four centring axes (38) by means of the first and second centring devices (36, 37; 72, 78) of the docking insert (32) and of the docking receptacle (31), and
- reaching an end position, wherein
- the end position of the docking insert (32) in the docking receptacle (31) is fixed by means of an axial securing device (60), and
- the position of the securing device (60) is locked by means of a locking device (91).

18. Method according to claim 17,
**characterised in that**
the movement of the docking insert (32) into the docking receptacle (31) in insertion direction (34) is limited by at least one axial stop device (52, 94; 65, 85).

## Revendications

1. Arrangement d'amarrage (30) comprenant un premier dispositif d'amarrage (31) et un deuxième dispositif d'amarrage (32), dans lequel
le premier dispositif d'amarrage (31) possède un dispositif de pré-centrage (33) approximativement en forme de U avec un bac d'introduction (35) se rétrécissant de manière conique et au moins un premier et un deuxième dispositifs de centrage (36, 72), le premier et le deuxième dispositifs de centrage (36, 72) comprenant chacun des éléments de couplage ou des éléments de contre-couplage, et
avec un deuxième dispositif d'amarrage (32) avec un corps de pré-centrage avec une surface d'introduction (90) se rétrécissant approximativement en cône dans une direction d'introduction et s'étendant dans une direction horizontale avec au moins un premier et un deuxième dispositifs de centrage (37, 78), le premier et le deuxième dispositifs de centrage (37, 78) comprenant chacun deux éléments de couplage et/ou éléments de contre-couplage, qui servent à centrer le deuxième dispositif d'amarrage (32) dans le premier dispositif d'amarrage (31), **caractérisé en ce que** le premier dispositif de centrage (36) présente deux éléments de contre-couplage (47, 71) qui présentent des premiers évidements de centrage (47) en forme de douille et des goupilles de centrage (71) réalisées en correspondance avec les logements de goupille de centrage (47) du premier dispositif de centrage (36), dans lequel
un dispositif de fixation (60) est prévu dans une zone de fixation des premiers logements de centrage (47), le dispositif de fixation (60) étant conçu pour la fixation axiale de premières goupilles de centrage (61) d'un module enfichable d'amarrage (32) dans les premiers logements de centrage (47) réalisés de manière correspondante du logement d'amarrage (31) et le dispositif de fixation (60) présentant pour la fixation des fourches à clavette (59) pouvant être actionnées hydrauliquement, qui peuvent être déplacées dans le sens vertical de telle sorte que les surfaces de fixation des fourches à clavette (59) s'engagent dans des rainures de fixation (74) correspondantes des goupilles de centrage (61).

2. Arrangement d'amarrage selon la revendication 1,
**caractérisé en ce**
**que**, dans le premier dispositif d'amarrage (31), une deuxième paroi d'amarrage (40) est formée dans une direction d'introduction (34) à l'arrière du bac d'introduction (35) dans un plan s'étendant transversalement à la direction d'introduction (34), dans laquelle est formé un logement d'amarrage (66) destiné à recevoir une plaque de couplage (100) fixée dans la direction d'introduction, et dans le deuxième dispositif d'amarrage (32), une deuxième paroi d'amarrage (76) s'étendant dans un plan transversal à la direction d'introduction (34) est formée sur le corps d'introduction à l'avant dans la direction d'introduction (34), un logement d'amarrage destiné à recevoir une plaque de couplage (100) fixée axialement étant formé dans la deuxième paroi d'amarrage (76).

3. Arrangement d'amarrage selon la revendication 1,
**caractérisé en ce**
**qu'**il est prévu dans les premières parois d'amarrage (39, 70) du premier et du deuxième dispositifs d'amarrage (31, 32) respectivement un dispositif de couplage d'arbre d'entraînement (67) pour relier un arbre d'entraînement du côté de l'appareil rapporté à un arbre d'entraînement du côté du véhicule, les dispositifs de couplage d'arbre d'entraînement (67) étant réalisés de manière à être alignés axialement pour provoquer un couplage forcé à l'état rentré et verrouillé des dispositifs d'amarrage (31, 32) et étant fixés chacun axialement, de sorte qu'une liaison forcée est provoquée lors d'un couplage mécanique des dispositifs de couplage (31, 32).

4. Arrangement d'amarrage selon l'une des revendications précédentes,
**caractérisé en ce**
**que** des dispositifs de couplage avec prise de force (68) sont disposés dans les deuxièmes parois d'amarrage respectives (40, 76) pour relier une prise de force côté outil porté à une prise de force côté véhicule, les dispositifs de couplage avec prise de force (68) étant réalisés alignés les uns avec les autres à l'état couplé et étant fixés axialement sur les deuxièmes parois d'amarrage (40, 76) de telle sorte que, lors de la liaison des dispositifs d'amarrage (31, 32) les uns avec les autres, une liaison forcée est réalisée.

5. Arrangement d'amarrage selon l'une des revendications précédentes,
**caractérisé en ce**
**que** le premier dispositif d'amarrage (31) est réalisé sous la forme d'un logement d'amarrage, comprenant un dispositif d'introduction avec deux crochets d'attache (44) à actionnement hydraulique.

6. Arrangement d'amarrage selon l'une des revendications précédentes,
**caractérisé en ce**
**que** les goupilles de centrage (71) présentent, dans le sens d'introduction (34), une section de centrage conique (75) et une section de centrage cylindrique (73).

7. Arrangement d'amarrage selon l'une des revendications précédentes,
**caractérisé en ce**
**que** les éléments de couplage et/ou les éléments de contre-couplage du premier et du deuxième dispositifs de centrage (37, 78) présentent au moins deux dispositifs de butée axiaux (52, 94, 65, 85) qui limitent un mouvement relatif entre le logement d'amarrage et l'insertion d'amarrage, les dispositifs de butée (52, 94, 65, 85) se présentant de préférence sur les premières et/ou les deuxièmes goupilles de centrage (71) et/ou sur les premiers et/ou les deuxièmes logements de centrage (47) comme des surfaces de butée annulaires (51, 93 ; 64, 84) et s'étendent dans un plan perpendiculaire à la direction d'introduction, et dans lequel les surfaces de butée axiales (51, 93 ; 64, 84) présentent des logements disposés radialement sur tout le pourtour et à égale distance les uns des autres.

8. Arrangement d'amarrage selon l'une des revendications précédentes,
**caractérisé en ce**
**qu'**une deuxième paroi d'amarrage (40) s'étendant dans un plan transversal à la direction d'introduction (34) est formée à l'avant du bac d'introduction (35) dans la direction d'introduction (34).

9. Arrangement d'amarrage selon l'une des revendications précédentes,
**caractérisé en ce**
**que** la première paroi d'amarrage (39) est disposée en direction verticale en dessous du bac d'introduction (35).

10. Arrangement d'amarrage selon l'une des revendications précédentes,
**caractérisé en ce**
**que** le bac d'introduction (35) présente deux parois latérales (41, 42) s'étendant dans la direction verticale, qui sont reliées au bac d'introduction (35) et à la deuxième paroi d'amarrage (40), des crochets d'attache (44) étant montés rotatifs entre les parois latérales (41, 42).

11. Arrangement d'amarrage selon l'une des revendications précédentes,
**caractérisé en ce**
**que** le deuxième dispositif d'amarrage (32) est réalisé sous la forme d'une insertion d'amarrage, présentant un corps de pré-centrage avec une surface d'insertion (90) se rétrécissant de manière approximativement conique dans une direction d'insertion (34) et s'étendant dans la direction horizontale, et
deux goupilles d'arrêt (89) s'étendant dans la direction horizontale, transversalement à la direction d'introduction.

12. Arrangement d'amarrage selon l'une des revendications précédentes,
**caractérisé en ce**
**qu'**une première paroi d'amarrage (70) s'étendant dans un plan transversal à la direction d'introduction (34) est formée sur le corps d'introduction à l'arrière dans une direction d'introduction (34), laquelle paroi est prévue dans la direction verticale en dessous du corps d'introduction.

13. Arrangement d'amarrage selon l'une des revendications précédentes,
**caractérisé en ce**
**qu'**un logement d'amarrage est formé dans la deuxième paroi d'amarrage (76) pour recevoir une plaque de couplage (100) pouvant être fixée de manière stationnaire.

14. Arrangement d'amarrage selon l'une des revendications précédentes,
**caractérisé en ce**
**que** le corps d'introduction présente deux parois latérales s'étendant dans la direction verticale, qui sont reliées à la deuxième paroi d'amarrage (76) et à la première paroi d'amarrage (70), les goupilles d'arrêt (89) s'étendant transversalement à la direction d'introduction étant disposées sur les parois latérales.

15. Véhicule équipé d'un premier dispositif d'amarrage selon l'une des revendications précédentes.

16. Outil porté, remorque ou essieu supplémentaire avec un deuxième arrangement d'amarrage selon l'une des revendications précédentes.

17. Procédé d'attelage d'un véhicule comprenant un premier ou un deuxième dispositif d'amarrage selon l'une des revendications 1 à 16 avec un essieu supplémentaire, une remorque ou un accessoire comprenant un deuxième ou un premier dispositif d'amarrage correspondant selon l'une quelconque des revendications 1 à 16,
comprenant les étapes suivantes
- Placer le corps d'introduction du module enfichable d'amarrage (32) dans la zone de l'espace de réception (43) du logement d'amarrage (31), de sorte qu'il se produit un pré-centrage du module enfichable d'amarrage (32) par rapport au logement d'amarrage (31),
- Actionner les crochets d'attache (44) au moyen des vérins de crochets d'attache (46),
- Abaisser les crochets d'attache (44) dans le sens vertical vers le bas,
- Insérer le module enfichable d'amarrage (32) dans le logement d'amarrage (31) au moyen des crochets d'attache (44),
- Centrer le module enfichable d'amarrage (32) par rapport au logement d'amarrage (31) le long de quatre axes de centrage (38) au moyen des premier et deuxième dispositifs de centrage (36, 37, 72, 78) du module enfichable d'amarrage (32) et du logement d'amarrage (31), et
- Atteindre une position finale, où
- la position finale du module enfichable d'amarrage (32) est fixée dans le logement d'amarrage (31) au moyen d'un dispositif de sécurité axial (60), et
- la position du dispositif de sécurité (60) est bloquée au moyen d'un dispositif de verrouillage (91).

18. Procédé selon la revendication 17,
**caractérisé en ce**
**que** le mouvement du module enfichable d'amarrage (32) dans le logement d'amarrage (31) dans la direction d'introduction (34) est limité par au moins un dispositif de butée axial (52, 94 65, 85).
